# EUROPEAN PATENT APPLICATION

(11) **EP 3 955 407 A1**
(43) Date of publication of application: **16.02.2022**
(21) Application number: 20382748.0
(22) Date of filing: 12.08.2020
(51) Int. Cl.: H02J 1/10, H02J 7/34, B60L 3/00, B60L 9/00, B60L 50/53, B60L 58/18, B61C 3/02

(54) **REDUNDANT POWER SYSTEM**

(71) Applicant: CAF Power & Automation, S.L.U., 20009 San Sebastian, Guipuzcoa (ES)
(72) Inventor: LOPEZ PARIS, Dimas, 20009 SAN SEBASTIAN (ES); LARBURU AZPILLAGA, Mikel, 20009 SAN SEBASTIAN (ES); ARRATIBEL URDAMPILLETA, Aitor, 20009 SAN SEBASTIAN (ES); LARREA AGUIRRE, Xabier, 20009 SAN SEBASTIAN (ES); NIEVA FATELA, Txomin, 20009 SAN SEBASTIAN (ES)
(74) Representative: Plasseraud IP

(57) **Abstract**

The present invention relates to a redundant power system comprising at least a first circuit and a second circuit, wherein each circuit comprises a power source (1) connected by means of switches (2) to a power bus (3), wherein the power bus (3) is configured to provide power to a load, wherein the redundant power system comprises a redundancy bus (11) connected between the power bus (3) of the first circuit and the power bus (3) of the second circuit, and wherein the redundancy bus (11) comprises at least one first group of contactors (12) interleaved in said redundancy bus (11).

## Description

### Technical field

The object of the present invention is a redundant power system, especially intended for independent traction chains in railway traction vehicles with electric autonomy.

The redundant power system object of the present invention has the advantage of guaranteeing the power source of the motors (and/or non-essential motors) in the event of failure of at least one of the traction chains, thus minimising the risk of a vehicle being immobilised on the track and requiring an auxiliary towing vehicle to evacuate it from the track.

Additionally, the redundant power system object of the present invention enables a maximum use of all the power sources which power the motors of the railway traction vehicle, guaranteeing that, even if a traction chain fails, the power source corresponding to said traction chain will be used in those other traction chains wherein it is required.

The redundant power system object of the present invention is applicable in the field of engineering for designing, manufacturing and operating electric traction vehicles and, more specifically, in railway traction vehicles.

### State of the art

Long-distance railway traction vehicles with electric autonomy are currently of great interest in the market due to the fact that they represent an alternative to the electrification of lines which are difficult to justify and the increasing tendency to achieve a future period with zero emissions.

In the railway electric traction industry, when the main energy system of a vehicle with electric autonomy is left without the possibility of supplying power, either due to intensive use or due to an error in the traction chain, different solutions are known which enable that main energy system to be changed for another power source, for example, formed by an energy storage device.

The document EP 3000646 A1 discloses a hybrid traction system that includes first and second energy supply devices that supply direct current energy. Respective first and second energy storage devices are connected to these first and second energy supply devices for accumulating or discharging direct current energy. There is also a first charging device which receives a direct current energy supply from the first energy supply device and from the first energy storage device, and actuates a first load. Moreover, there is a second charging device which receives a direct current energy supply from the second energy supply device and from the second energy storage device and actuates a second load.

The hybrid traction system includes an intergroup contactor for electrically connecting and disconnecting the input terminals of the first energy storage device and the second energy storage device. In other words, document EP 3000646 A1 proposes the interconnection of the batteries, by means of a bypass constituted by the intergroup contactor. In this manner, assuming that the first traction chain stops operating, the aforementioned document proposes that the second traction chain which is kept in operation becomes powered by the first energy storage device in parallel with the second energy storage device.

The powering of an electrical load by means of two energy storage devices in parallel involves a variety of problems, among which it is worth mentioning: a premature degradation of the energy storage devices due to the unbalanced currents circulating between both storage devices and a waste of the energy stored therein.

In a context wherein the success of the integration of storage devices in the train lies in the optimisation of cost, required space and safety, it is necessary to optimise the amount of electrical energy on board, the use of storage devices based on state-of-the-art storage technologies which offer a high density of volumetric and gravimetric energy in order to occupy the minimum amount of space, have the minimum possible weight, have a long useful life and offer safety in the railway environment.

### Object of the invention

In order to avoid the aforementioned potential problems, derived from the paralleling of two energy storage devices and optimising the amount of energy on board in an electric traction railway vehicle, the present invention relates to a redundant electric power source system.

The redundant power system object of the present invention comprises at least a first circuit and a second circuit, wherein each circuit comprises a power source (e.g. one or more energy storage devices, diesel groups, hydrogen-based generators, etc.) connected via switches to a power bus. The power bus of each circuit is configured to provide power to one or more loads of said circuit.

In a novel manner, the redundant power system object of the present invention comprises a redundancy bus (or backup or auxiliary bus) connected between the power bus of the first circuit and the power bus of the second circuit. In other words, the redundancy bus is connected to the first circuit and the second circuit at a point in said circuits located between the switches and the load.

The redundancy bus comprises at least a first group of contactors interleaved in said redundancy bus.

A configuration like the one described above enables, if the power source of the second circuit can no longer power the load of the second circuit (e.g., because it is an energy storage device (e.g. a battery) that has been depleted), the power source of the first circuit to be able to power the load of the second circuit, all this through the switches of the first circuit and the contactors of the first group of contactors, and in electrical insulation from the power source of the second circuit, since the switches of the second circuit would open when the power source of the second circuit could no longer power the load of the second circuit.

Preferably, the backup or auxiliary powering of the power source of the first circuit to the load of the second circuit only takes place in the event that the load of the first circuit can no longer function, either because a failure has occurred in said load or because a failure has occurred in some other element of the first circuit which prevents the operation of the load of the first circuit.

The redundant power system is therefore configured to operate in "normal operation" and "operation in failure mode".

In "normal operation", there are no failures in the circuits which prevent the operation of the loads.

In this operating mode, the contactors of at least a first group of contactors are open and the switches of the first circuit and of the second circuit are closed, such that the power source of the first circuit exclusively powers the load of the first circuit and the power source of the second circuit exclusively powers the load of the second circuit.

Likewise, in this normal operating mode, it is enabled that under certain circumstances (e.g. if the load is one or more electric motor/s which pull a vehicle and the power source is a storage device or a set of them, and if it is in a circumstance with regenerative braking of the vehicle) the load can return energy to the power source.

In "operation in failure mode", there are failures in the circuits which prevent the operation of the loads (e.g. the load of the first circuit can no longer operate).

According to a first phase of the operation in failure mode, the redundant power system is configured to open the switches of the first circuit. In this manner, the power source of the first circuit (which is in good condition and with the possibility of continuing to provide power to a load) is insulated from the load of the first circuit (which can no longer function). Thus, the power source of the first circuit is protected from possible discharges.

According to a second phase of the operation in failure mode wherein the power source of the second circuit can no longer provide power to the load of the second circuit (e.g. because the storage device has been depleted if the power source is a storage device (e.g. a battery)), the redundant power system is configured to open the switches of the second circuit, close the switches of the first circuit and close the contactors of the first group of contactors.

In this manner, it is possible to provide backup power to the load of the second circuit, by means of the power source of the first circuit.

According to a possible embodiment of the redundant power system of the present invention, the redundancy bus also comprises a second group of contactors interleaved in said redundancy bus.

The first group of contactors is located in electrical proximity to the power bus of the first circuit and the second group of contactors is located in electrical proximity to the power bus of the second circuit. This means that, if it is assumed that an electric current which goes from the power source of the first circuit to the load of the second circuit, said electric current first crosses through the first group of contactors and then the second group of contactors.

This feature provides greater versatility to the redundant power system, enabling, for example, the closing of one of the groups of contactors as a "setup manoeuvre" of the backup power, leaving the system ready to provide said backup power, but without being able to provide it until the contactors of the other group of contactors is not closed.

According to this embodiment with two groups of contactors, the redundant power system is configured to operate in failure mode wherein the load of the first circuit can no longer operate.

According to a first phase of operation in failure mode, the redundant power system is configured to open the switches of the first circuit (insulating and protecting the power source of the first circuit) and close the contactors of the first group of contactors (thus setting up the system to provide backup power when required by the second circuit).

According to a second phase of the operation in failure mode wherein the power source of the second circuit can no longer supply power to the load of the second circuit (e.g. due to a storage device that has been depleted), the redundant power system is configured to open the switches of the second circuit (thus insulating the power source of the second circuit and protecting it from deterioration by possible unbalanced electrical currents), in order to close the contactors of the second group of contactors and to close the switches of the first circuit, such that the power source of the first circuit powers the load of the second circuit.

The backup power of the load of the second circuit is thus made possible by means of the power source of the first circuit.

According to a possible embodiment, the first circuit is a first traction chain of a railway electric traction vehicle and the load of the first circuit comprises at least one motor. Likewise, according to this embodiment, the second circuit is a second traction chain of said railway electric traction vehicle and the load of the second circuit comprises at least one motor.

The railway electric traction vehicle can be, for example, an Electric Multiple Unit (EMU), a locomotive or convoy of a train or metro, a tram, etc. These are vehicles which foresee the circulation thereof with electric autonomy, preferably based on storage devices (e.g. batteries) with independent traction chains, ensuring the autonomy of the vehicle (both in propulsion and auxiliary services), such that, by means of the redundant power system of the present invention, practically no eventual failure of the traction chain means that there is a need to tow and remove the vehicle from the track, since the complete discharge of the energy on board in the vehicle is possible.

This makes it possible to apply the redundant power system to electric traction railway vehicles, so that they can operate in an autonomous mode (independent of a power source through catenary, because they are in a section wherein there is no catenary or because they are purely autonomous vehicles) and can guarantee the operation of the electrical systems thereof (e.g. auxiliary systems of the train powered from one of the traction chains) including if one of the traction chains is left without power. Thus, it is also guaranteed that the vehicle will not be stranded on a track due to one of the traction chains thereof being left without power.

Likewise, in line with the above, according to a possible embodiment, the at least one motor of each traction chain is connected to a DC bus through a first converter (e.g. an inverter) and the power bus is connected to the DC bus through a second converter (e.g. a DC/DC converter). This enables greater control to be had over the electrical variables of the power system, adapting the output of the power source to the nominal characteristics of the at least one motor.

The redundant power system object of the present invention is applicable to hybrid railway vehicles wherein the at least one motor of each traction chain is configured to be powered according to a possible power mode through a direct current catenary.

Likewise, the redundant power system object of the present invention is applicable to hybrid railway vehicles wherein the at least one motor of each traction chain is configured to be powered according to a possible power mode through an alternating current catenary, through a rectifier (which can be arranged in addition to a transformer) interleaved between the catenary and the DC bus. In this manner, it is possible to rectify the current coming from the catenary and adapt it to the DC bus.

By adapting the redundant power system object of the present invention to these hybrid railway vehicles, it enables, in certain circumstances wherein the at least one engine is being powered from the catenary, part of the energy coming from the catenary to also be used in returning energy to the power source.

As has already been set forth on several occasions, according to a possible embodiment of the invention, the power sources of the first circuit and the second circuit are storage devices made up of batteries. It can be a single battery for each circuit or a plurality of batteries for each circuit, in this case the batteries of each circuit being able to be connected in series and/or in parallel.

The batteries can be recharged from the catenary if the vehicle is operating in catenary power mode. The batteries can also be recharged from an external mains network using a charger, when the vehicle is not in use or if the batteries have been removed to be recharged externally. The batteries can also be recharged by regenerative braking manoeuvres of the vehicle.

The power source can be integrated in the traction chain and auxiliaries directly or with a power converter (with or without electrical insulation between the input and output thereof) and can be based on technology involving supercapacitors, Lithium-Ion capacitors (LiC), Lithium-Ion, hydrogen, among others, or hybrids thereof. Furthermore, it can be composed of one or more battery branches in parallel and the respective centralised or distributed battery management system (BMS) thereof. Each branch can be formed, in turn, by different modules in series and/or parallel and the respective connection/disconnection system thereof (also known as a power box). Each module can be made up of different cells in series and/or parallel and the connection/disconnection system can be made up of sensors, protection elements such as fuses, semiconductors, relays, contactors and pre-charging resistors.

The control of the switches and contactors of the redundant power system can be carried out by a single control module or a plurality of control modules.

Likewise, the control of the switches and contactors can be part of the control of the rectifier (in AC catenaries), the DC/DC converter, the inverter, the train, the storage device (the BMS thereof), an additional element (for example, card or set of control cards) and/or it can be distributed among all or some of them.

The control equipment or module/s has the task of identifying the failure mode and acting on the elements of the system such that backup or redundancy powering can be performed.

The present invention also relates to a redundant power method.

The redundant power source method object of the present invention comprises making use of a redundant power system like the one described in claim 1.

In an operation in failure mode wherein the load of the first circuit cannot operate (e.g. because the load or any of the elements of the first circuit have failed, such that they impede the load from being powered by the power source of the first circuit), and assuming that the power source of the second circuit can no longer power the load of the second circuit (for example, because said power source of the second circuit has been depleted if it is a storage device), the redundant power method object of the present invention comprises:
- closing the switches of the first circuit, and;
- closing the contactors of the at least one first group of contactors.

The redundant power source method object of the present invention also envisages making use of a redundant power system like the one described in claims 5 to 12.

In this case, in an operation in failure mode wherein the load of the first circuit cannot operate, and during a first phase of the failure mode wherein the power source of the second circuit can still power the load of the second circuit, the method comprises:
- opening the switches of the first circuit, and;
- closing the contactors of the first group of contactors.

Subsequently, in a second phase of the failure mode wherein the power source of the second circuit can no longer power the load of the second circuit, the method comprises:
- opening the switches of the second circuit;
- closing the contactors of the second group of contactors, and;
- closing the switches of the first circuit.

### Description of the figures

As part of the explanation of at least one embodiment of the invention, the following figures have been included.

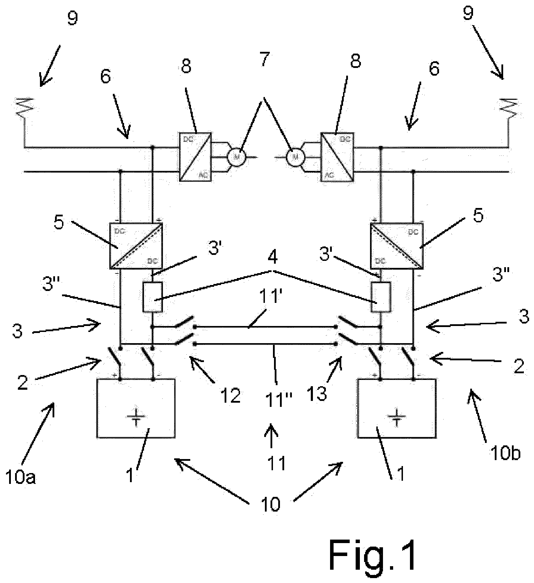

Figure 1 shows a schematic view of an embodiment of the redundant power system, wherein two traction chains are shown wherein the respective motors of each traction chain are powered by means of direct current catenary, and wherein the power source (on board the vehicle) of each traction chain is disconnected.

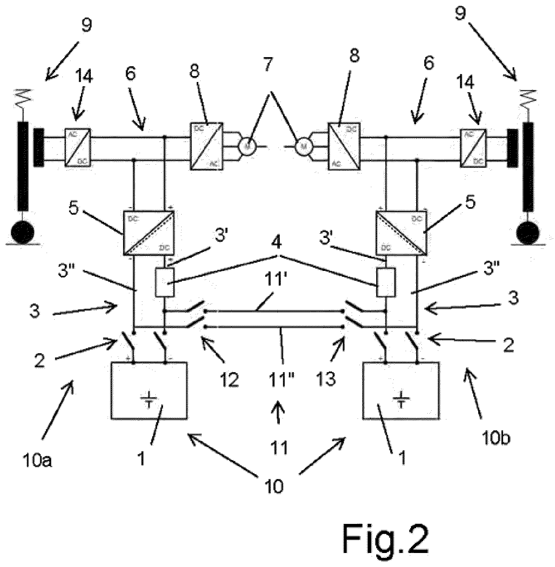

Figure 2 shows a schematic view of an embodiment of the redundant power system, wherein two traction chains are shown wherein the respective motors of each traction chain are powered by means of alternating current catenary, and wherein the power source (on board the vehicle) of each traction chain is disconnected.

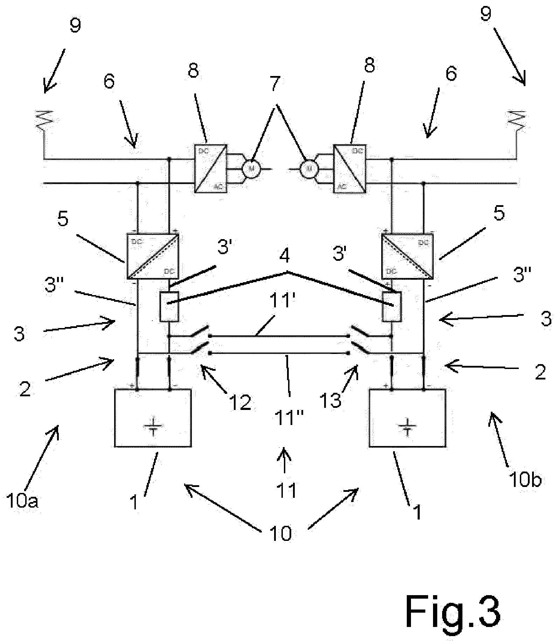

Figure 3 shows a schematic view according to Figure 1, wherein the respective motors of each traction chain are now powered by means of the respective power sources of each traction chain. This figure represents the "normal operation" mode of the redundant power system.

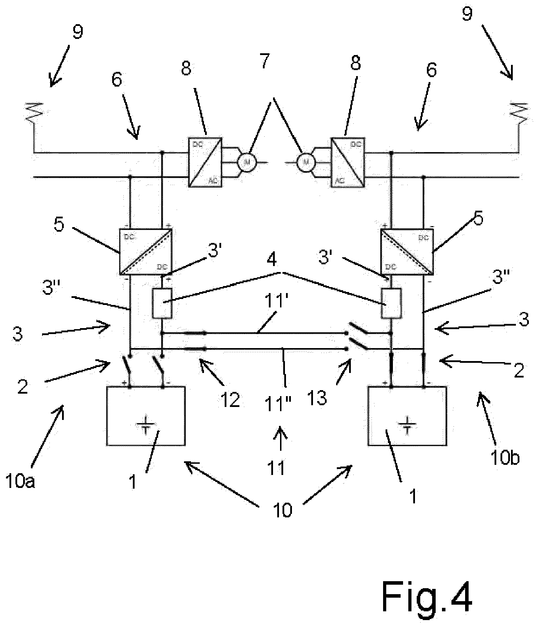

Figure 4 shows a schematic view according to Figure 3, wherein the tractor/motor group of the first traction chain (on the left) has experienced a failure, thus disconnecting the switches of the power source (1) of the first traction chain. This figure represents the first phase of operation in failure mode of the redundant power system.

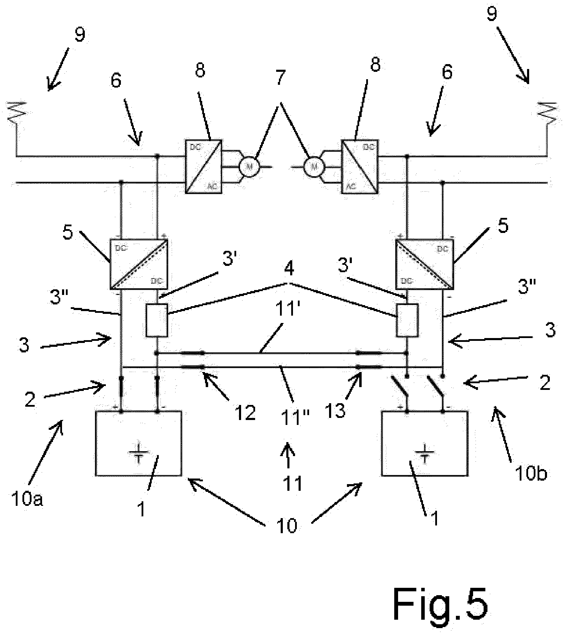

Figure 5 shows a schematic view according to Figure 4, wherein the power source of the second traction chain (on the right) has been depleted, disconnecting the switches thereof and connecting the power source of the first traction chain, by means of the contactors between traction chains, in order to power the tractor/motor group of the second traction chain. This figure represents the second phase of operation in failure mode of the redundant power system.

### Detailed description of the invention

The present invention relates, as mentioned above, to a redundant power system.

The redundant power system of the invention is especially applicable to electric traction railway vehicles wherein the power starting from a direct current (DC) catenary (9) or alternating current (AC) catenary (9) is envisaged, as shown schematically in Figure 1 and Figure 2, respectively.

In these types of vehicles, there is a hybrid power system, by means of catenary (9) and by means of a power source (1) on board in the vehicle (typically a battery or set of batteries, although it can also be another type of generator (for example, by means of diesel or hydrogen)), such that when the power by means of catenary (9) is not available, the motor groups of the traction chains are powered starting from the power source (1) associated with each traction chain (10).

Within each traction chain (10), each motor group or tractor is made up of at least one motor (7) (load) and a first converter (8) or inverter (load device) which connects the motor group to a DC bus (6).

Moreover, within each traction chain (10), there is a second converter (5) (DC/DC converter) (energy supply device) connected to the DC bus (6) and to a power bus (3).

Likewise, in each traction chain (10), the power bus (3) connects the second converter (5) with a power source (1) (energy storage device).

In the case of hybrid vehicles powered from an alternating current catenary (9) (see Figure 2), the possible existence is also foreseen of a rectifier (14) in each traction chain (10), in order to adapt the catenary (9) power to the DC bus (6) which powers the motor group.

In correspondence with the output terminals of the power source (1), there are switches (2) configured to connect and disconnect the power source (1) of each traction chain (10) with the power bus (3).

Interleaved in the power bus (3), between the switches (2) of the power source (1) and the second converter (5), there is also optionally a power interface (4).

The power interface (4) can be made up of power elements such as sets of relays, contactors and pre-charge resistors, among others. Following the instructions of the control module or system that manages the operation of the train with the failure modes of the system, the power interface (4) makes it possible to discharge the accumulation system.

The redundant power system of the invention can be used in two or more traction chains (10). In the Figures, only a first traction chain (10a) and a second traction chain (10b) are represented.

The redundant power system comprises a redundancy bus (11) or backup bus, which connects the power bus (3) of the first traction chain (10a) with the power bus (3) of the second traction chain (10b). The redundancy bus (11) or backup bus connects with the power bus (3) of each traction chain (10) at a point on the power bus (3) located between the switches (2) of the power source (1) and the second converter (5).

There is a first group of contactors (12) interleaved in the redundancy bus (11) or backup bus. Preferably, there is a first group of contactors (11) and a second group of contactors (12) interleaved in the redundancy bus (11) or backup bus.

The contactors of the first group of contactors (12) connect the high power line (3') and the low power line (3") of the power bus (3) of the first traction chain (10a) respectively with the high redundancy line (11') and with the low redundancy line (11") of the redundancy bus (11) or backup bus.

The contactors of the second group of contactors (13) connect the high power line (3') and the low power line (3") of the power bus (3) of the second traction chain (10b) respectively with the high redundancy line (11') and with the low redundancy line (11") of the redundancy bus (11) or backup bus.

Figure 3 shows the operation of the redundant power system of the invention in "normal operation".

In normal operation, when the motor group of the first traction chain (10a) is in operation and is being powered from the power source (1) of the first traction chain (10a), the contactors of the first group of contactors (12) are open. The switches (2) of the power source (1) of the first traction chain (10a) are closed.

Likewise, in normal operation, when the motor group of the second traction chain (10b) is in operation and is being powered from the power source (1) of the second traction chain (10b), the contactors of the second group of contactors (13) are open. The switches (2) of the power source (1) of the second traction chain (10b) are closed.

In "operation in failure mode", the redundant power system has a first phase of operation in failure mode and a second phase of operation in failure mode.

It is considered that it is in operation in failure mode when the motor group or some other element of one of the traction chains (10) has failed. However, the power source (1) and switches (2) of said traction chain (10) are kept in perfect condition.

Figure 4 represents the operation of the redundant power system in "operation in failure mode", during the first phase of operation in failure mode.

It is considered that the motor group of the first traction chain (10a) has failed. In this circumstance, the redundant power system is configured to open the switches (2) of the power source (1) of the first traction chain (10a) and close the contactors of the first group of contactors (12).

At the same time, during this first phase of operation in failure mode, the second traction chain (10b) is kept in perfect condition, with the power source (1) thereof powering the motor group thereof. In these circumstances, the switches (2) of the power source (1) of the second traction chain (10b) are kept closed, while the contactors of the second group of contactors (13) are kept open.

Under these circumstances, when the power source (1) of the second traction chain (10b) is depleted, the redundant power system enters the second phase of operation in failure mode.

Figure 5 represents the operation of the redundant power system in "operation in failure mode", during the second phase of operation in failure mode.

In this circumstance, the redundant power system is configured to open the switches (2) of the power source (1) of the second traction chain (10b), close the contactors of the second group of contactors (13) and close the switches (2) of the power source (1) of the first traction chain (10a).

Therefore, in the circumstances described, the motor group of the second traction chain (10b) is then powered from the power source (1) of the first traction chain (10a), through the redundancy bus (11) or backup bus.

The operation of the switches (2) and the contactors of each group of switches (12, 13) is controlled by means of at least one control module (not shown in the figures) of the redundant power system.

Preferably, there is a first control module which controls the opening and closing of the switches (2) of the first traction chain (10a) and of the contactors of the first group of contactors (12), and there is a second control module which controls the opening and closing of the switches (2) of the second traction chain (10b) and of the contactors of the second group of contactors (13).

## Claims

1. A redundant power system comprising at least a first circuit and a second circuit, wherein each circuit comprises a power source (1) connected by means of switches (2) to a power bus (3), wherein the power bus (3) is configured to provide power to a load, wherein the redundant power system is **characterised in that** it comprises a redundancy bus (11) connected between the power bus (3) of the first circuit and the power bus (3) of the second circuit, and wherein the redundancy bus (11) comprises at least one first group of contactors (12) interleaved in said redundancy bus (11).

2. The redundant power system according to claim 1, **characterised in that** it is configured to operate in a normal operating mode wherein the contactors of at least a first group of contactors (12) are open and wherein the switches (2) of the first circuit and the second circuit are closed, such that the power source (1) of the first circuit exclusively powers the load of the first circuit and the power source (1) of the second circuit exclusively powers the load of the second circuit.

3. The redundant power system according to claim 2, **characterised in that** it is configured to operate in failure mode wherein the load of the first circuit can no longer operate, wherein according to a first phase of operation in failure mode, the redundant power system is configured to open the switches (2) of the first circuit.

4. The redundant power system according to claim 3, **characterised in that** according to a second phase of operation in failure mode wherein the power source (1) of the second circuit can no longer provide power to the load of the second circuit, the redundant power system is configured to open the switches (2) of the second circuit, close the switches (2) of the first circuit and close the contactors of the first group of contactors (12), such that the power source (1) of the first circuit powers the load of the second circuit.

5. The redundant power system according to claims 1 or 2, **characterised in that** the redundancy bus (11) also comprises a second group of contactors (13) interleaved in said redundancy bus (11), wherein the first group of contactors (12) is located in electrical proximity to the power bus (3) of the first circuit and wherein the second group of contactors (13) is located in electrical proximity to the power bus (3) of the second circuit.

6. The redundant power system according to claim 5, **characterised in that** it is configured to operate in failure mode wherein the load of the first circuit can no longer operate, wherein according to a first phase of operation in failure mode, the redundant power system is configured to open the switches (2) of the first circuit and close the contactors of the first group of contactors (12).

7. The redundant power system according to claim 6, **characterised in that** according to a second phase of operation in failure mode wherein the power source (1) of the second circuit can no longer provide power to the load of the second circuit, the redundant power system is configured to open the switches (2) of the second circuit, close the contactors of the second group of contactors (12) and close the switches (2) of the first circuit, such that the power source (1) of the first circuit powers the load of the second circuit.

8. The redundant power system according to any of the preceding claims, **characterised in that** the first circuit is a first traction chain (10a) of a railway electric traction vehicle, the load of the first circuit comprising at least one motor (7), and wherein the second circuit is a second traction chain (10b) of the railway electric traction vehicle, the load of the second circuit comprising at least one motor (7).

9. The redundant power system according to claim 8, **characterised in that** the at least one motor (7) of each traction chain (10) is connected to a DC bus (6) through a first converter (8) and wherein the power bus (3) is connected to the DC bus (6) through a second converter (5).

10. The redundant power system according to claims 8 or 9, **characterised in that** the at least one motor (7) of each traction chain (10) is configured to be powered according to a possible power mode through a direct current catenary (9).

11. The redundant power system according to claims 8 or 9, **characterised in that** the at least one motor (7) of each traction chain (10) is configured to be powered according to a possible power mode through an alternating current catenary (9), through a rectifier (14) interleaved between the catenary (9) and the DC bus (6).

12. The redundant power system according to any of the preceding claims, **characterised in that** the power sources (1) of the first circuit and the second circuit are storage devices.

13. A redundant power method comprising making use of the redundant power system according to claim 1, **characterised in that** in an operation in failure mode wherein the load of the first circuit cannot operate, if the power source (1) of the second circuit can no longer power the load of the second circuit, the method comprises:
- closing the switches (2) of the first circuit, and;
- closing the contactors of the at least one first group of contactors (12).

14. The redundant power method according to claim 13, comprising making use of the redundant power system according to any of claims 5 to 12, **characterised in that** in an operation in failure mode wherein the load of the first circuit cannot operate, in a first phase of the operation in failure mode wherein the power source (1) of the second circuit can still power the load of the second circuit, the method comprises:
- opening the switches (2) of the first circuit, and;
- closing the contactors of the first group of contactors (12).

15. The redundant power method according to claim 14, **characterised in that** in a second phase of the operation in failure mode wherein the power source (1) of the second circuit can no longer power the load of the second circuit, the method comprises:
- opening the switches (2) of the second circuit;
- closing the contactors of the second group of contactors (13), and;
- closing the switches (2) of the first circuit.
